# EUROPEAN PATENT APPLICATION

(11) **EP 4 296 304 A1**
(43) Date of publication of application: **27.12.2023**
(21) Application number: 22756257.6
(22) Date of filing: 17.02.2022
(51) Int. Cl.: C08K 5/14, C08L 83/05, C08L 83/07, C08K 3/22, C08K 3/26

(54) **HEAT-RESISTANT MILLABLE FLUOROSILICONE RUBBER COMPOSITION**

(30) Priority: 18.02.2021 JP 2021023983
(71) Applicant: SHIN-ETSU CHEMICAL CO., LTD., Tokyo 1000005 (JP)
(72) Inventor: HAYASHIDA, Osamu, Annaka-shi, Gunma 379-0224 (JP)
(74) Representative: Cabinet Nony
(86) International application number: PCT/JP2022/006337
(87) International publication number: WO 2022/176939

(57) **Abstract**

[Problem]

An object of the present invention is to provide a millable fluorosilicone rubber composition that provides a fluorosilicone rubber (cured product) having excellent heat resistance at 200°C or higher, and at 250°C or higher in particular.

[Solution]

The present invention provides a millable fluorosilicone rubber composition comprising: (A) 100 parts by mass of an organopolysiloxane having at least two alkenyl groups each bonded a silicon atom in one molecule, having a number of siloxane units having at least one fluoroalkyl group that is 40% or more of a total number of the siloxane units, and having an average polymerization degree of 100 or more; (B) 5 to 100 parts by mass of a reinforcing silica having a specific surface area of 50 m²/g or more; (C) 0.01 to 10 parts by mass of titanium oxide denatured with the transition metal oxide, that contains 0.01 to 5% by mass of a transition metal oxide; (D) 0.01 to 10 parts by mass of calcium carbonate; and (E) 0.1 to 50 parts by mass of a curing agent.

## Description

The present invention relates to a millable fluorosilicone rubber composition that provides a silicone rubber having excellent heat resistance.

### BACKGROUND ART

Silicone rubber is widely used in various fields such as the fields of electrical devices, automobiles, construction, medical treatment, and food due to having properties such as superior weather resistance, electrical property, low-compression set property, heat resistance, and cold resistance. In particular, a fluorosilicone rubber composition whose main agent is a fluorosilicone raw rubber having a main chain of a base polymer composed substantially of a repeating structure of (3,3,3-trifluoropropyl)methylsiloxane units having a 3,3,3-trifluoropropyl group as a side chain substituent also has superior solvent resistance properties and is widely used as a diaphragm, an O-ring and an oil seal material, as transport equipment parts and petroleum-related equipment parts. Nowadays, demand for silicone rubber is rising, and the development of silicone rubber having superior properties is desired.

It is known that additives such as cerium oxide, cerium hydroxide, iron oxide, and carbon black are combined to further improve the heat resistance of a silicone rubber. However, in the case of a fluorosilicone rubber, since heat resistance of a silicone rubber under a high-temperature condition of 200°C or higher is insufficient, a silicone rubber having excellent heat resistance under such a condition is required.

Patent Literature 1 (Japanese National Phase Publication No. 2016-518461) discloses improving heat resistance of a silicone rubber by adding titanium oxide and iron oxide at an amount of 0.1% by mass or more to the silicone rubber. However, Patent Literature 1 describes only the amounts of formaldehyde, octamethylcyclotetrasiloxane, decamethylcyclopentasiloxane, and dodecamethylcyclohexasiloxane generated after heating at 300°C for one hour as determined, and does not disclose any changes in properties. Further, iron oxide is well known as a colorant for silicone rubber, and since it colors silicone rubber red even when used in small amounts, adding color is difficult if a color other than red is desired.

Patent Literature 2 (Japanese Patent Application Laid-Open No. 2014-031408) discloses improving heat resistance of a silicone rubber by adding hydrous cerium oxide and/or hydrous zirconium oxide to the silicone rubber, and the properties were determined after being placed in a dryer at 225°C for 72 hours. However the properties of the silicone rubber deteriorates under further higher temperature condition.

Patent Literature 3 (Japanese Patent Application Laid-Open No. 2006-021991) and Patent Literature 4 (WO2010/140499) disclose titanium oxide doped with a metal ion (metal salt), such as that of a transition metal. However, they only disclose uses as a mid-infrared filter and a photocatalyst, which utilize the optical properties thereof.

Patent Literature 5 (WO2018/079376) discloses that heat resistance is improved by adding titanium oxide doped with a transition metal oxide of 0.01 to 5% by mass and cerium oxide and/or cerium hydroxide in combination to a millable silicone rubber, but this is insufficient for fluorosilicone rubber.

Patent Literature 6 (WO2008/154319) introduces a technique that improves heat resistance by adding carbon black, calcium carbonate, iron oxide, and optionally zinc oxide, to a fluorosilicone rubber, but adding color to a desired appearance is difficult due to the addition of carbon and iron oxide.

Patent Literature 1: Japanese National Phase Publication No. 2016-518461
Patent Literature 2: Japanese Patent Application Laid-Open No. 2014-031408
Patent Literature 3: Japanese Patent Application Laid-Open No. 2006-021991
Patent Literature 4: WO2010/140499
Patent Literature 5: WO2018/079376
Patent Literature 6: WO2008/154319

### DISCLOSURE OF THE INVENTION

### PROBLEMS TO BE SOLVED BY THE INVENTION

An object of the present invention is to provide a millable fluorosilicone rubber composition that provides a fluorosilicone rubber (cured product) having excellent heat resistance at 200°C or higher, and at 250°C or higher in particular.

### SOLUTIONS TO THE PROBLEMS

The present inventors have made research to solve the aforesaid problems and found that a fluorosilicone rubber composition comprising titanium oxide denatured with a transition metal oxide of 0.01 to 5% by mass and a calcium carbonate remarkably improves heat resistance of a fluorosilicone rubber obtained from the composition, leading them to achieve the present invention.

That is, the present invention provides a millable fluorosilicone rubber composition comprising:
(A) 100 parts by mass of an organopolysiloxane having at least two alkenyl groups each bonded a silicon atom in one molecule, having a number of siloxane units having at least one fluoroalkyl group that is 40% or more of a total number of the siloxane units, and having an average polymerization degree of 100 or more;
(B) 5 to 100 parts by mass of a reinforcing silica having a specific surface area of 50 m²/g or more;
(C) 0.01 to 10 parts by mass of titanium oxide denatured with the transition metal oxide, that contains 0.01 to 5% by mass of a transition metal oxide;
(D) 0.01 to 10 parts by mass of calcium carbonate; and
(E) 0.1 to 50 parts by mass of a curing agent.

### EFFECTS OF THE INVENTION

The fluorosilicone rubber composition of the present invention is capable of providing a fluorosilicone rubber (cured product) having excellent heat resistance. That is, the fluorosilicone rubber obtained by the present invention has excellent heat resistance at 200°C or higher, and at 250°C or higher in particular. Further, an increase in hardness of the fluorosilicone rubber can be suppressed. In addition, since the fluorosilicone rubber composition of the present invention is white, it can be easily colored in a desired color by means of a colorant, such as a pigment.

### DESCRIPTION OF PREFERRED EMBODIMENTS

The composition of the present invention is described in detail below.

In the present specification, a specific surface area is a value determined by the BET method. Note that a millable composition refers to a high-viscosity and non-liquid composition having no self-fluidity at room temperature (25°C) and capable of being homogenously kneaded by a kneader such as a roll mill (e.g. a double roll mill or a triple roll mill) under shear stress.

### [(A) Organopolysiloxane]

A component (A) is an organopolysiloxane as a main agent (base polymer) of the present composition, and the organopolysiloxane has at least two alkenyl groups each bonded a silicon atom in one molecule, has a number of siloxane units having at least one fluoroalkyl group that is 40% or more of a total number of all the siloxane units, and further, has an average polymerization degree of 100 of more. The organopolysiloxane contains two or more, and preferably 2 to 10,000, alkenyl groups each bonded a silicon atom in one molecule.

The organopolysiloxane (A) has an average polymerization degree of 100 or more (usually, 100 to 100,000), and in particular, preferably has an average polymerization degree in a range of 1,000 to 100,000, more preferably a range of 2,000 to 50,000, and particularly preferably a range of 2,000 to 20,000. It is not desirable that the average polymerization degree is less than the afore-mentioned lower limit values, the silicone rubber composition of the present invention will not satisfy the properties as a millable rubber and, thus, a roll kneading performance or the like will be remarkably impaired. Note that the average polymerization degree in the present invention is based on a polystyrene equivalent weight-average molecular weight in a GPC (Gel Permeation Chromatography) analysis determined under the following conditions.

### [Determination conditions]

Developing solvent: THF
Flow rate: 1 mL/min
Detector: Differential refractometer (RI)
Column: four TSKgel SuperMultipore HZ-Hs (ex Tosoh Corporation)
Column temperature: 25°C
Sample injection volume: 10 µL (THF solution with a concentration of 0.1% by mass)
The component (A) in the present invention is preferably a non-liquid organopolysiloxane raw rubber having a high polymerization degree (high viscosity) and having no self-fluidity at room temperature (25°C).

The component (A) has a number of siloxane units having at least one fluoroalkyl group that is 40% or more, and preferably 45% or more of the total number of the siloxane units. The upper limit is not particularly limited and may be 100% or less, is preferably less than 100%, is more preferably 99.8% or less, and may be 98% or less. The component (A) has the siloxane units having the fluoroalkyl groups in the afore-mentioned range and, thereby, the component (A) may also contain copolymers having siloxane units having fluoroalkyl groups and siloxane units having dimethyl groups.

The component (A) is preferably represented by the following average composition formula (1).

R¹ₙSiO_{(4-n)/2} (1)

In the afore-mentioned formula (1), R¹ is, independently of each other, a monovalent hydrocarbon group having 1 to 20 carbon atoms or a fluoroalkyl group having 1 to 20 carbon atoms; ***n*** is a positive number of 1.95 to 2.04.

In the afore-mentioned average composition formula (1), R¹ is, independent of each other, a monovalent hydrocarbon group having 1 to 20 carbon atoms, preferably 1 to 12 carbon atoms, and more preferably 1 to 8 carbon atoms or a fluoroalkyl group having 1 to 20 carbon atoms, preferably 1 to 10 carbon atoms, and more preferably 1 to 6 carbon atoms. Examples of the monovalent hydrocarbon group include, for example, alkyl groups such as a methyl group, an ethyl group, a propyl group, and a butyl group; cycloalkyl groups such as a cyclohexyl group; alkenyl groups such as a vinyl group, an allyl group, a butenyl group, and a hexenyl group; aryl groups such as a phenyl group and a tolyl group; and aralkyl groups such as a β-phenylpropyl group. Among these, a methyl group, a vinyl group, and a phenyl group are preferred, and a methyl group and a vinyl group are more preferred. Examples of the fluoroalkyl group include, for example, a 3,3,3-trifluoropropyl group, a 3,3,4,4,5,5,5-heptafluorobutyl group, and a 3,3,4,4,5,5,6,6,6-nonafluorohexyl group. Among these, a 3,3,3-trifluoropropyl group is preferred.

In the afore-mentioned average composition formula (1), ***n*** is a positive number of 1.95 to 2.04, and preferably a positive number of 1.98 to 2.02. If ***n*** does not fall within the range of 1.95 to 2.04, an obtained cured product may fail to have sufficient rubber elasticity.

The organopolysiloxane (A) needs to have two or more alkenyl groups in one molecule, and it is preferred that alkenyl groups are 0.001 to 10 mol%, and 0.01 to 5 mol% in particular, of a total mol of R¹ in the afore-mentioned formula (1). This alkenyl group is preferably a vinyl group and an allyl group, and particularly preferably a vinyl group.

While the structure of the organopolysiloxane, which is the component (A), is not particularly limited, the organopolysiloxane is preferably a linear diorganopolysiloxane having a main chain composed of repeating diorganosiloxane units (R¹₂SiO_{2/2}), and in which both terminals of the molecular chain are blocked with a triorganosiloxy group (R¹₃SiO_{1/2}). R¹ is as described above. Both molecular chain ends are preferably blocked with, for example, a trimethylsiloxy group, a dimethylvinylsiloxy group, a dimethylhydroxysiloxy group, a methyldivinylsiloxy group, or a trivinylsiloxy group. Any one kind of these organopolysiloxanes may be used singularly, or two or more kinds having different polymerization degrees and molecular structures may be used in combination.

The component (A) is preferably contained in the fluorosilicone rubber composition of the present invention in an amount of 43 to 96% by mass, more preferably 50 to 90% by mass, and further preferably 60 to 80% by mass.

### [(B) Reinforcing silica]

A reinforcing silica, which is the component (B), serves as a filler for imparting excellent mechanical properties to the obtained silicone rubber composition. The reinforcing silica may be a precipitated silica (wet silica) or a fumed silica (dry silica), and it has multiple silanol groups present on its surface. In the present invention, the reinforcing silica (B) needs to have a specific surface area of 50 m²/g or more determined by the BET method. The specific surface area of the reinforcing silica (B) is preferably 100 to 400 m²/g. If the specific surface area is less than 50 m²/g, the reinforcing effect of the silicone rubber imparted by the component (B) is insufficient.

The reinforcing silica, which is the component (B), may be used in an untreated state, or surface-treated as necessary with an organosilicon compound such as organopolysiloxane, organopolysilazane, chlorosilane, and alkoxysilane. Any one kind of these reinforcing silicas may be used singularly, or two or more kinds may be used in combination.

The amount of the reinforcing silica (B) is 5 to 100 parts by mass, preferably 10 to 80 parts by mass, and more preferably 20 to 70 parts by mass, relative to 100 parts by mass of the organopolysiloxane (A). If the amount of the component (B) exceeds the afore-mentioned upper limit value or is less than the afore-mentioned lower limit value, not only will the obtained silicone rubber composition have impaired workability, but a silicone rubber cured product obtained by curing such a silicone rubber composition will have insufficient tensile strength, tear strength, and other mechanical properties.

### [(C) Titanium oxide containing transition metal oxide]

The component (C) is titanium oxide denatured with the transition metal oxide, that contains 0.01 to 5% by mass of a transition metal oxide. The component (C) is a component that remarkably improves heat resistance of the silicone rubber. In the present invention, the titanium oxide denatured with the transition metal oxide is more specifically titanium oxide doped with a transition metal oxide. In addition, the term "doped with" refers to a form in which a transition metal oxide is present in the lattice of titanium oxide. The amount of the transition metal oxide contained in the titanium oxide is 0.01 to 5% by mass, and may preferably be more than 0.01% by mass, preferably 0.05% by mass or more, more preferably 0.1% by mass or more, and further preferably 1% by mass or more, relative to the mass of the denatured (in particular, doped) titanium oxide. The upper limit value is 5% by mass or less, and may preferably be 4.5% by mass or less, and more preferably 4% by mass or less. The titanium oxide includes the transition metal oxide in this range and, thereby, it is possible to effectively improve heat resistance of the obtained fluorosilicone rubber.

In the present invention, the transition metal oxide is a transition metal oxide excluding titanium oxide, which is subject to denaturing. Examples of the transition metal oxide include manganese oxide, iron oxide, cobalt oxide, nickel oxide, copper oxide, zinc oxide, and zirconium oxide, among which iron oxide (FeO, Fe₂O₃) is preferred. By using the titanium oxide denatured with iron oxide; in particular, the titanium oxide doped with iron oxide, the red coloring caused by the iron oxide is suppressed and, further, heat resistance of the silicone rubber is improved. The titanium oxide denatured with the transition metal oxide; in particular the titanium oxide doped with the transition metal oxide, may be prepared by any known manufacturing method. For example, Japanese Patent Application Laid-Open No. 2010-013484 discloses a method using titanium tetrachloride and iron trichloride and that involves doping an iron oxide with an 80% anatase-type and 20% rutile-type crystalline titanium dioxide.

An amount of the component (C) is 0.01 to 10 parts by mass, preferably 0.1 to 5 parts by mass, and more preferably 0.5 to 3 parts by mass, relative to 100 parts by mass of the organopolysiloxane (A). If the amount of the component (C) is less than the afore-mentioned lower limit value, heat resistance of the silicone rubber is not improved. If the amount exceeds the afore-mentioned upper limit value, the mechanical properties of the silicone rubber may remarkably impair.

In addition, a content ratio of the transition metal oxide in the fluorosilicone rubber composition is preferably 0.005 to 1.0% by mass, more preferably 0.01 to 1.0% by mass, and further preferably 0.01 to 0.5% by mass, based on the total amount of the composition. When the content ratio is the afore-mentioned lower limit value or more, the effect of the transition metal oxide contained in the titanium oxide is sufficiently obtained. When the content ratio is the afore-mentioned upper limit value or less, there is little impact on the coloring, therefore this is preferred.

### [(D) Calcium Carbonate]

The component (D) is calcium carbonate and remarkably improves heat resistance of the silicone rubber when used in combination with the component (C). Examples of commercially available calcium carbonates include Silver-W and HAKUENKA CCR (ex Shiraishi Kogyo Kaisha, Ltd.), and Whiton SSB (ex Bihoku Funka Kogyo Co., Ltd.). An amount of the calcium carbonate in the fluorosilicone rubber composition is preferably 0.01 to 10 parts by mass, more preferably 0.1 to 5 parts by mass, and more preferably 0.5 to 3 parts by mass, relative to 100 parts by mass of the component (A). If the amount is less than the afore-mentioned lower limit value, heat resistance of the silicone rubber is not improved. If the amount exceeds the afore-mentioned upper limit value, the mechanical properties of the silicone rubber may be remarkably impaired. A particle size of the calcium carbonate is not particularly limited, and an average particle diameter may be, for example, of 0.1 to 50 µm.

The preferable ratio in which the component (C) and the component (D) are combined is a mass ratio of 1:100 to 100:1, and more preferably 1:50 to 50:1.

### [(E) Curing Agent]

A curing agent (E) is not particularly limited provided that it is capable of curing the silicone rubber composition used in the present invention. One kind of the component (E) may be used singularly, or two or more kinds may be used in combination. Examples of the component (E) include, for example, an organic peroxide curing agent (E-1), an addition reaction-type curing agent (E-2), and a combination of the component (E-1) and the component (E-2). An amount of the component (E) is 0.1 to 50 parts by mass, preferably 0.1 to 40 parts by mass, and more preferably 0.2 to 10 parts by mass, relative to 100 parts by mass of the organopolysiloxane (A).

### (E-1) Organic Peroxide Curing Agent

Examples of the organic peroxide curing agent (E-1) include, for example, benzoyl peroxide, 2,4-dichlorobenzoyl peroxide, p-methylbenzoyl peroxide, o-methylbenzoyl peroxide, 2,4-dicumyl peroxide, 2,5-dimethyl-2,5-bis(t-butylperoxy)hexane, di-t-butyl peroxide, t-butyl perbenzoate, and 1,6-hexanediol-bis-t-butyl peroxycarbonate.

An amount of the organic peroxide curing agent is 0.1 to 10 parts by mass, and particularly preferably 0.2 to 5 parts by mass, relative to 100 parts by mass of the component (A). When the organic peroxide curing agent is combined in an excessively small amount, curing may be insufficient, and when the organic peroxide curing agent is combined in an excessively large amount, the silicone rubber cured product may turn yellow due to decomposition residue from the organic peroxide.

### (E-2) Addition Reaction Curing Agent

Organohydrogenpolysiloxane and a hydrosilylation catalyst may be used in combination as an addition reaction curing agent (E-2). Provided that the organohydrogenpolysiloxane contains approximately two or more hydrogen atoms each bonded to a silicon atom (i.e., hydrosilyl groups), preferably three or more, more preferably 3 to 200, and further preferably 4 to 100 in one molecule, a structure thereof may be any one of a linear, circular, branched, or three-dimensional network structure. The hydrosilyl groups may be present at the molecular chain ends, the middle of the molecular chain, or at both.

The organohydrogenpolysiloxane may be an organohydrogenpolysiloxane any known as a crosslinking agent for the addition reaction-curable silicone rubber composition.

For example, the organohydrogenpolysiloxane represented by the following average composition formula (2) can be used.

R²ₚH_{q}SiO_{(4-p-q)/2} (2)

In the afore-mentioned average composition formula (2), R² is, independent of each other, a substituted or unsubstituted monovalent hydrocarbon group having 1 to 12 carbon atoms, and preferably 1 to 8 carbon atoms, and preferably has no aliphatic unsaturated bonds. In detail, examples include alkyl groups such as a methyl group, an ethyl group, and a propyl group; cycloalkyl groups such as a cyclohexyl group; aryl groups such as a phenyl group and a tolyl group; and aralkyl groups such as a benzyl group, a 2-phenylethyl group, and a 2-phenylpropyl group. Note that one part or all of the hydrogen atoms in these groups may be substituted with halogen atoms or the like, examples of which include, for example, a 3,3,3-trifluoropropyl group.

In the afore-mentioned average composition formula (2), ***p*** and ***q*** are positive numbers; ***p*** satisfies 0 < p < 3, preferably satisfies 0.5 ≤ p ≤ 2.2, and more preferably satisfies 1.0 ≤ p ≤ 2.0, ***q*** satisfies 0 < q <_ 3, preferably satisfies 0.002 ≤ q <_ 1.1, and more preferably satisfies 0.005 ≤ q <_ 1, and ***p*** + ***q*** satisfies 0 < p + q ≤ 3, preferably satisfies 1 ≤ p + q ≤ 3, and more preferably satisfies 1.002 ≤ p + q ≤ 2.7.

It is preferable that the organohydrogenpolysiloxane has a viscosity of 0.5 to 10,000 mPa·s, and particularly 1 to 300 mPa·s, at 25°C. In the present invention, the viscosity is determined at 25°C using a rotational viscosimeter in accordance with a method described in JIS K7117-1:1999. The organohydrogenpolysiloxane preferably has an average polymerization degree of 1 to 1,000, and in particular, a range of 3 to 150 is preferred, while a range of 3 to 80 is particularly preferred. The average polymerization degree is based on the polystyrene equivalent weight-average molecular weight in the GPC (Gel Permeation Chromatography) analysis determined under the afore-mentioned conditions.

Examples of the organohydrogenpolysiloxane include, for example, 1,1,3,3-tetramethyldisiloxane; 1,3,5,7-tetramethylcyclotetrasiloxane; tris(hydrogendimethylsiloxy)methylsilane; tris(hydrogendimethylsiloxy)phenylsilane; methylhydrogencyclopolysiloxane; a methylhydrogensiloxane-dimethylsiloxane cyclic copolymer; methylhydrogenpolysiloxane with both ends blocked with a trimethylsiloxy group; a dimethylsiloxane-methylhydrogensiloxane copolymer with both ends blocked with a trimethylsiloxy group; dimethylpolysiloxane with both ends blocked with a dimethylhydrogensiloxy group; a dimethylsiloxane-methylhydrogensiloxane copolymer with both ends blocked with a dimethylhydrogensiloxy group; a methylhydrogensiloxane-diphenylsiloxane copolymer with both ends blocked with a trimethylsiloxy group; a methylhydrogensiloxane-diphenylsiloxane-dimethylsiloxane copolymer with both ends blocked with a trimethylsiloxy group; a methylhydrogensiloxane-methylphenylsiloxane-dimethylsiloxane copolymer with both ends blocked with a trimethylsiloxy group; a methylhydrogensiloxane-dimethylsiloxane-diphenylsiloxane copolymer with both ends blocked with a dimethylhydrogensiloxy group; a methylhydrogensiloxane-dimethylsiloxane-methylphenylsiloxane copolymer with both ends blocked with a dimethylhydrogensiloxy group; a copolymer composed of a (CH₃)₂HSiO_{1/2} unit, a (CH₃)₃SiO_{1/2} unit, and an SiO_{4/2} unit; a copolymer composed of a (CH₃)₂HSiO_{1/2} unit and an SiO_{4/2} unit; a copolymer composed of a (CH₃)₂HSiO_{1/2} unit, an SiO_{4/2} unit, and a (C₆H₅)₃SiO_{1/2} unit; and compounds prepared by substituting a part or all of the methyl groups in any of the above listed compounds with an alkyl group, a phenyl group, and the like as other groups.

It is preferable that the afore-mentioned organohydrogenpolysiloxane is combined in an amount of 0.1 to 40 parts by mass, relative to 100 parts by mass of the component (A). Further, a ratio of the number of the hydrogen atom bonded to a silicon atom (hydrosilyl groups) is suitably in a range of 0.5 to 10, and preferably suitably in a range of 0.7 to 5, relative to one alkenyl group in the component (A). If the number of the hydrogen atom bonded to a silicon atom is less than the afore-mentioned lower limit value, cross-linking will be insufficient, thus sufficient mechanical strength may not be obtained. If the number of the hydrogen atom bonded to a silicon atom exceeds the afore-mentioned upper limit value, physical properties after curing are impaired; in particular, heat resistance of the silicone rubber may deteriorate, and a larger compression set may be observed.

A hydrosilylation catalyst is a catalyst for causing a hydrosilylation addition reaction between the alkenyl groups in the component (A), and the hydrogen atom bonded to a silicon atom (SiH groups) in the organohydrogenpolysiloxane. Examples of the hydrosilylation catalyst include a platinum group metal-based catalyst. The platinum group metal-based catalyst is a single platinum group metal and compounds thereof, and the catalyst may be any known catalyst for an addition reaction curing-type silicone rubber composition. Examples of the catalyst include, for example, a platinum catalyst, such as a particulate platinum metal adsorbed on a carrier such as silica, alumina, or silica gel, platinic chloride, chloroplatinic acid, and an alcohol solution of chloroplatinic acid hexahydrate, a palladium catalyst, and a rhodium catalyst, however platinum or platinum compounds (platinum catalysts) are preferred.

The catalyst may be added in an amount capable of promoting the afore-mentioned addition reaction. The amount of the catalyst is generally such that an amount of the platinum group metal is in a range of 1 ppm by mass to 1% by mass, and preferably in a range of 10 to 500 ppm by mass, relative to the organopolysiloxane, which is the component (A). If the amount of the catalyst is less than the afore-mentioned lower limit value, the addition reaction will be insufficiently promoted, thus curing may be insufficient. If the amount of the catalyst exceeds the afore-mentioned upper limit value, there will be little impact on reactivity, thus an economic disadvantage may be incurred.

The silicone rubber composition may be a covulcanization type silicone rubber composition that is a combination of addition reaction curing and organic peroxide curing, obtained by combining the afore-mentioned component (E-1) and component (E-2) with the component (A) in the respective ranges of the afore-mentioned amounts.

### [(F) Dispersant for Filler]

The silicone rubber composition of the present invention may further contain a dispersant for filler; in particular, a dispersant for inorganic filler or silica, in addition to the components (A) to (E). This is preferably a dispersant for silica. By further containing the dispersant, it is possible to obtain a favorable dispersion of the afore-mentioned reinforcing silica in the composition. The dispersant may be, for example, a low-molecular organosilicon compound having alkoxy groups or silanol groups, or a hydrolysate thereof. More specifically, various alkoxysilanes may be used; in particular, a phenyl group-containing alkoxysilane and a hydrolysate thereof, diphenylsilanediol, a carbonfunctional silane, and a silanol group-containing low-molecular siloxane. Among these, diphenylsilanediol is preferably used, as by doing so, heat resistance of the silicone rubber is further improved, and by using diphenylsilanediol in combination with alkylalkoxysilane or a hydrolysate thereof, the dispersibility of the filler is further improved, thus this is more preferable.

An amount of the component (F) is preferably 0.1 to 50 parts by mass, and particularly preferably 1 to 20 parts by mass, relative to 100 parts by mass of the afore-mentioned component (A). If the amount of the organopolysiloxane with both ends blocked with a silanol group is an excessively small, no effects owing to addition will be obtained. If the amount of the organopolysiloxane is excessively large, the composition will have an extremely low degree of plasticity, thus roller adhesion occurs in a kneading device such as a roll mill, which may impair roller workability.

### Other Components

In addition to the above components, the silicone rubber composition in the present invention may comprise other components as necessary in a range in which the effects of the present invention will not be impaired, which is any known fillers and additives for a heat-curable silicone rubber composition such as a filler other than the component (B) (e.g. crushed quartz, diatomaceous earth), a colorant (pigment), a tearing strength improving agent, a flame retardancy improving agent (e.g. a platinum compound), an acid acceptor, a thermal conductivity improving agent (e.g. alumina, boron nitride), a mold release agent, and a reaction controlling agent. Any one kind of these other components may be used singularly, or two or more kinds may be used in combination. Further, the amount may be adjusted as necessary in a range in which the effects of the present invention will not be impaired.

### Method for preparing the composition

The millable silicone rubber composition of the present invention may be obtained by mixing the components composing the composition with any known kneading device such as a kneader, a Banbury mixer, and a double roll mill. When the silicone rubber composition employed is a composition containing the above components (A) to (E), it is preferable that the curing agent (E) is added to the mixture obtained after mixing the organopolysiloxane (A), the reinforcing silica (B), the titanium oxide doped with the transition metal oxide (C), and the calcium carbonate (D). When the composition containing the afore-mentioned components (A) to (E) further contains another component therein, it is preferable that the component (E) is added later to a mixture obtained by mixing the component (A), the component (B), the component (C), the component (D), and the other component.

### Silicone rubber molded product

Any known molding method may be selected as a molding method in accordance with a shape and size of a target molded product. Examples of the method include, for example, cast molding, compression molding, injection molding, calender molding, and extrusion molding.

### Cured product

Curing conditions may be any known conditions for a molding method to be employed, and they generally include a temperature of 60 to 450°C for about several seconds to one day. Further, post curing (secondary curing) may be performed in an oven or the like at 200°C or higher, and preferably 200 to 250°C, for an hour or longer, preferably about 1 to 70 hours, and more preferably 1 to 10 hours, for the purposes of reducing the compression set of the obtained cured product, reducing the low-molecular siloxane component remaining in the obtained silicone rubber, eliminating the degradant of the organic peroxide in the silicone rubber, and the like.

### EXAMPLES

The present invention will be described in more detail with reference to the Examples and Comparative Examples below, however the present invention is not limited to the following examples.

Each evaluation of the present Examples and Comparative Examples was performed as follows.

### [Heat Resistance]

Using a specimen sheet produced by curing the silicone rubber composition, initial values of hardness (durometer A), tensile strength (MPa), and elongation at break (%) were determined in accordance with JIS K 6249:2003. After placing the specimen sheet in a dryer at 225°C for seven days or in a dryer at 260°C for three days, the hardness, tensile strength, and elongation at break were determined. The results thereof are shown in Tables 1 and 2.

### [Colorability of pigment]

A double roll mill was used to add 0.5 parts by mass of a yellow pigment (product name: KE-COLOR-Y-064, ex Shin-Etsu Chemical Co., Ltd.) relative to 100 parts by mass of the silicone rubber composition prepared in the following Examples and Comparative Examples, and a color tone of the composition was visually confirmed before and after combining. The results thereof are shown in Tables 1 and 2.

The organopolysiloxanes (A) used in the Examples and Comparative Examples are as follows. Note that in the following, a mol% of the respective siloxane units is a ratio of the number of respective siloxane units to the total number of the siloxane units.

An organopolysiloxane raw rubber (A1): an organopolysiloxane raw rubber composed of 99.825 mol% of 3,3,3-trifluoropropylmethylsiloxane units, 0.125 mol% of methylvinylsiloxane units, 0.05 mol% of dimethylvinylsiloxy units, and having an average polymerization degree of 4,000 (the number of alkenyl groups in one molecule is 7, equivalent to ***n*** = 2.0005 in the afore-mentioned average composition formula (1)).

An organopolysiloxane raw rubber (A2): an organopolysiloxane raw rubber composed of 40 mol% of 3,3,3-trifluoropropylmethylsiloxane units, 59.825 mol% of dimethylsiloxane units, 0.125 mol% of methylvinylsiloxane units, and 0.05 mol% of dimethylvinylsiloxy units, and having an average polymerization degree of 4,000 (the number of alkenyl groups in one molecule is 7, equivalent to ***n*** = 2.0005 in the afore-mentioned average composition formula (1)).

The component (C) used in the Examples and Comparative Examples is titanium oxide containing 3% by mass of iron oxide (Fe₂O₃) and doped with the iron oxide (AEROXIDE TiO₂ PF2, ex NIPPON AEROSIL CO., LTD.).

Further, in Comparative Example 3, titanium oxide not denatured with iron oxide (AEROXIDE TiO₂ P25, ex NIPPON AEROSIL CO., LTD.) was used.

The content ratios (% by mass) of the iron oxide in the silicone rubber compositions in the following Examples and Comparative Examples are shown in Tables 1 and 2.

### [Example 1]

100 Parts by mass of an organopolysiloxane raw rubber (A1); 40 parts by mass of a fumed silica having a BET specific surface area of 200 m²/g (AEROSIL 200, ex NIPPON AEROSIL CO., LTD); 5 parts by mass of diphenylsilanediol; and 1.0 part by mass of a 3,3,3-trifluoropropylmethylpolysiloxane having a silanol group at both ends, having an average polymerization degree of 4, and having a viscosity of 15 mPa·s at 25°C, were added and then heated at 150°C for two hours while mixing using a kneader to obtain a base compound (1).

To the base compound (1), 1.0 part by mass of titanium oxide containing the afore-mentioned iron oxide (C) and 1.0 parts by mass of the calcium carbonate (D) (Silver-W, ex Shiraishi Kogyo Kaisha, Ltd.) relative to 100 parts by mass of the organopolysiloxane raw rubber were added using a double roll mill to prepare a compound (A).

0.6 Part by mass of 2,5-dimethyl-2,5-bis(t-butylperoxy)hexane relative to 100 parts by mass of the organopolysiloxane raw rubber was added as the curing agent (E) to the compound (A) using a double roll mill, then homogenously mixed to obtain a raw rubber-like silicone rubber composition.

The silicone rubber composition was press-cured under a condition of 165°C and 70 kgf/cm² for 10 minutes to produce a specimen sheet having a thickness of 2 mm. Next, the specimen sheet was post-cured in an oven at 200°C for four hours. The obtained cured product was subjected to the afore-mentioned heat resistance test.

### [Example 2]

Example 1 was repeated to prepare a silicone rubber composition, except that the amount of the titanium oxide containing the afore-mentioned iron oxide (C) added in Example 1 was 2.0 parts by mass, and a cured product was obtained. The obtained cured product was subjected to the afore-mentioned heat resistance test.

### [Example 3]

Example 1 was repeated to prepare a silicone rubber composition, except that the diphenylsilanediol was not added and the dimethylpolysiloxane having the silanol group at both ends, having an average polymerization degree of 4, and having a viscosity of 15 mPa·s at 25°C was 6.0 parts by mass in Example 1, and a cured product was obtained. The obtained cured product was subjected to the afore-mentioned heat resistance test.

### [Example 4]

To the afore-mentioned compound (A), 0.5 part by mass of a methylhydrogenpolysiloxane having hydrosilyl groups on its side chains and both ends blocked with a trimethylsiloxy group (polymerization degree is 8, 0.014 mol/g of hydrosilyl groups (i.e., eight in one molecule), equivalent to ***p*** = 1.4, ***q*** = 0.8 in the afore-mentioned average composition formula (2)) as a curing agent; 0.07 part by mass of ethynylcyclohexanol as a reaction controlling agent; and 0.15 part by mass of a platinum catalyst (Pt concentration is 1% by mass), relative to 100 parts by mass of the organopolysiloxane raw rubber, were added using a double roll mill, then homogenously mixed to produce a raw rubber-like silicone rubber composition. The composition was then press-cured under a condition of 150°C and 70 kgf/cm² for 10 minutes to produce a specimen sheet having a thickness of 2 mm. Next, the specimen sheet was post-cured in an oven at 200°C for four hours. The obtained cured product was subjected to the afore-mentioned heat resistance test.

### [Example 5]

Example 1 was repeated to prepare a silicone rubber composition, except that the organopolysiloxane raw rubber (A1) was changed to 100 parts by mass of the organopolysiloxane raw rubber (A2) in Example 1, and a cured product was obtained. The obtained cured product was subjected to the afore-mentioned heat resistance test.

### [Comparative Example 1]

Example 1 was repeated to prepare a silicone rubber composition, except that the calcium carbonate (D) was not added in Example 1, and a cured product was obtained. The obtained cured product was subjected to the afore-mentioned heat resistance test.

### [Comparative Example 2]

Example 1 was repeated to prepare a silicone rubber composition, except that the component (C) was not added in Example 1, and a cured product was obtained. The obtained cured product was subjected to the afore-mentioned heat resistance test.

### [Comparative Example 3]

Example 1 was repeated to prepare a silicone rubber composition, except that 1.0 part by mass of titanium oxide not denatured with iron oxide (AEROXIDE TiO2 P25, ex NIPPON AEROSIL CO., LTD) relative to 100 parts by mass of the organopolysiloxane raw rubber and 0.03 part by mass of an iron oxide (red iron oxide SR-570, ex Tone Sangyo Co., Ltd.) were added in Example 1 instead of the component (C), and a cured product was obtained. The obtained cured product was subjected to the afore-mentioned heat resistance test.

### [Comparative Example 4]

Example 4 was repeated to prepare a silicone rubber composition, except that neither of the component (C) nor the component (D) were added in Example 4, and a cured product was obtained. The obtained cured product was subjected to the afore-mentioned heat resistance test.

### [Comparative Example 5]

Example 1 was repeated to prepare a silicone rubber composition, except that neither of the component (C) nor the component (D) were added in Example 1, and a cured product was obtained. The obtained cured product was subjected to the afore-mentioned heat resistance test.

### [Comparative Example 6]

Example 1 was repeated to prepare a silicone rubber composition, except that the component (D) was not added and, instead, 1 part by mass of a cerium oxide (product name: cerium oxide SN-2 (product of NIKKI Corporation) was added in Example 1, and a cured product was obtained. The obtained cured product was subjected to the afore-mentioned heat resistance test.

### [Comparative Reference Example 1]

Example 1 was repeated to prepare a base compound (2), except that the organopolysiloxane raw rubber (A1) was replaced with 3,3,3-trifluoropropylmethylpolysiloxane with both ends blocked with a dimethylvinylsiloxy group and having an average polymerization degree of 90 in Example 1. The base compound (2) was in the form of a liquid, thus could not be kneaded with a double roll mill (not shown in Table 1).

**[Table 1]**

| | | | Ex.1 | Ex.2 | Ex.3 | Ex.4 | Ex.5 |
|---|---|---|---|---|---|---|---|
| (A) | Organopolysiloxane raw rubber (A1) Fluorosiloxane unit 99.825 mol% | | 100 | 100 | 100 | 100 | |
| | Organopolysiloxane raw rubber (A2) Fluorosiloxane unit 40mol% | | | | | | 100 |
| (B) | Fumed silica, AEROSIL 200 | | 40 | 40 | 40 | 40 | 40 |
| (C) | Titanium oxide doped with the iron oxide, containing 3 % by mass of Fe₂O₃ | | 1 | 2 | 1 | 1 | 1 |
| (D) | Calcium carbonate | | 1 | 1 | 1 | 1 | 1 |
| (E-1) | 2,5-dimethyl-2,5-bis(t-butylperoxy)hexane | | 0.6 | 0.6 | 0.6 | | 0.6 |
| (E-2) | Methylhydrogen polysiloxane having trimethylsiloxy groups at both terminals having polymerization degree of 8 and 0.014mol of SiH group | | | | | 0.5 | |
| | Platinum catalyst containing 1 % by mass of Pt | | | | | 0.15 | |
| (F) | Diphenylsilanediol | | 5 | 5 | | 5 | 5 |
| | 3,3,3-trifluoropropylmethylpolysiloxane having silanol groups at both terminals, an average degree of polymerization of 4 and a viscosity of 15mPa· s | | 1 | 1 | 6 | 1 | 1 |
| | Ethynylcyclohexanol | | | | | 0.07 | |
| A content of iron oxide in composition, % by mass | | | 0.020 | 0.040 | 0.020 | 0.020 | 0.020 |
| Colorability of pigment | | Before adding pigment | Milky white | Milky white | Milky white | Milky white | Milky white |
| | | After adding pigment | Yellow | Yellow | Yellow | Yellow | Yellow |
| Hardness, durometer A | | Initial stage | 50 | 52 | 49 | 46 | 52 |
| | | After heat test at 225°C for 7 days | 48 | 47 | 46 | 44 | 50 |
| | | After heat test at 260°C for 3 days | 47 | 47 | 46 | 43 | 49 |
| Tensile strength, MPa | | Initial stage | 11.4 | 10.0 | 10.5 | 9.8 | 11.8 |
| | | After heat test at 225°C at 7 days | 7.4 | 7.3 | 7.1 | 6.4 | 8.0 |
| | | After heat test at 260°C for 3 days | 7.0 | 6.9 | 6.8 | 6.3 | 7.9 |
| Elongation at break, % | | Initial stage | 560 | 550 | 630 | 560 | 540 |
| | | After heat test at 225°C for 7days | 450 | 440 | 440 | 450 | 470 |
| | | After heat test at 260 °C for 3days | 450 | 450 | 450 | 450 | 460 |

**[Table 2]**

| | | | Com. Ex. | | | | | |
|---|---|---|---|---|---|---|---|---|
| | | | 1 | 2 | 3 | 4 | 5 | 6 |
| (A) | Organopolysiloxane raw rubber (A1) | | 100 | 100 | 100 | 100 | 100 | 100 |
| (B) | Fumed silica, AEROSIL 200 | | 40 | 40 | 40 | 40 | 40 | 40 |
| (C) | Titanium oxide doped with the iron oxide, containing 3 % by mass of FezOs | | 1 | | | | | 1 |
| | Titanium oxide | | | | 1 | | | |
| | Iron oxide | | | | 0.03 | | | |
| (D) | Calcium carbonate | | | 1 | 1 | | | |
| | Cerium oxide | | | | | | | 1 |
| (E-1) | 2,5-dimethyl-2,5-bis(t-butylperoxy)hexane | | 0.6 | 0.6 | 0.6 | | 0.6 | 0.6 |
| (E-2) | Methylhydrogen polysiloxane having trimethylsiloxy groups at both terminals having polymerization degree of 8 and 0.014mol of SiH group | | | | | 0.5 | | |
| | Platinum catalyst containing 1 % by mass of Pt | | | | | 0.15 | | |
| (F) | Diphenylsilanediol | | 5 | 5 | 5 | 5 | 5 | 5 |
| | 3,3,3-trifluoropropylmethylpolysiloxan e having silanol groups at both terminals | | 1 | 1 | 1 | 1 | 1 | 1 |
| | Ethynylcyclohexanol | | | | | 0.07 | | |
| A content of iron oxide in composition, % by mass | | | 0.020 | 0.000 | 0.020 | 0.000 | 0.000 | 0.020 |
| Colorability of pigment | | Before adding pigment | Milky white | Milky white | Red | Note¹⁾ | Note¹⁾ | Milky white |
| | | After adding pigment | Yellow | Yellow | Red | Yellow | Yellow | Yellow |
| Hardness, durometer A | | Initial stage | 50 | 49 | 50 | 45 | 49 | 49 |
| | | After heat test at 225°C for 7 days | 49 | 56 | 49 | 67 | 79 | 48 |
| | | After heat test at 260°C for 3 days | 48 | 57 | 47 | 68 | 78 | 47 |
| Tensile strength, MPa | | Initial stage | 11.2 | 11.7 | 10.8 | 10.8 | 11.3 | 11.6 |
| | | After heat test at 225°C at 7 days | 5.0 | 5.5 | 6.9 | N.D. | N.D. | 6.0 |
| | | After heat test at 260°C for 3 days | 5.3 | 4.9 | 6.4 | N.D. | N.D. | 5.8 |
| Elongation at break, % | | Initial stage | 550 | 580 | 560 | 590 | 590 | 560 |
| | | After heat test at 225°C for 7days | 310 | 220 | 420 | N.D. | N.D. | 360 |
| | | After heat test at 260 °C for 3days | 320 | 210 | 400 | N.D. | N.D. | 360 |

| | | | | | | | | |
|---|---|---|---|---|---|---|---|---|
| Note¹⁾ : Milky white and semitransparent | | | | | | | | |

As in Comparative Examples 1 and 2 shown in Table 2 above, the fluorosilicone rubbers obtained from the compositions only containing either one of the titanium oxide containing the iron oxide (C) or the calcium carbonate (D) have inferior long-term heat resistance at 225°C and 260°C. Further, the fluorosilicone rubber obtained from the fluorosilicone rubber composition containing the titanium oxide containing the iron oxide and the cerium oxide also has inferior heat resistance at a high temperature over a long period of time (Comparative Example 6). In addition, as shown in Comparative Example 3, while the silicone rubber obtained from the composition into which the titanium oxide and the iron oxide were separately added had favorable long-term heat resistance, the silicone rubber was colored red even though only a small amount of the iron oxide was combined, thus coloring using a pigment was not possible. In contrast to this, as shown in Table 1 above, the silicone rubbers (cured products) obtained from the fluorosilicone rubber composition of the present invention have excellent heat resistance even during long-term storage at a high temperature, are able to maintain favorable mechanical properties, and can suppress an increase in the hardness of the silicone rubber, and the like. Furthermore, since the fluorosilicone rubber composition of the present invention is white, it can be easily colored in a desired color by means of a colorant.

### INDUSTRIAL APPLICABILITY

The fluorosilicone rubber composition of the present invention is capable of providing a fluorosilicone rubber (cured product) having excellent heat resistance. That is, the fluorosilicone rubber obtained by the present invention has excellent heat resistance at 200°C or higher, and 250°C or higher in particular. In addition, an increase in hardness of the fluorosilicone rubber can be suppressed. Furthermore, since the fluorosilicone rubber composition of the present invention is white, it can be easily colored in a desired color by means of a colorant, such as a pigment.

## Claims

1. A millable fluorosilicone rubber composition comprising:
(A) 100 parts by mass of an organopolysiloxane having at least two alkenyl groups each bonded a silicon atom in one molecule, having a number of siloxane units having at least one fluoroalkyl group that is 40% or more of a total number of the siloxane units, and having an average polymerization degree of 100 or more;
(B) 5 to 100 parts by mass of a reinforcing silica having a specific surface area of 50 m²/g or more;
(C) 0.01 to 10 parts by mass of titanium oxide denatured with the transition metal oxide, that contains 0.01 to 5% by mass of a transition metal oxide;
(D) 0.01 to 10 parts by mass of calcium carbonate; and
(E) 0.1 to 50 parts by mass of a curing agent.

2. The millable fluorosilicone rubber composition according to claim 1, wherein an amount of the transition metal oxide is 0.005 to 1.0% by mass, based on the total amount of the composition.

3. The millable fluorosilicone rubber composition according to claim 1 or 2, wherein the transition metal oxide is titanium oxide.

4. The millable fluorosilicone rubber composition according to any one of claims 1 to 3, comprising a dispersant for filler in an amount of 0.1 to 50 parts by mass.

5. The millable fluorosilicone rubber composition according to any one of claims 1 to 4, wherein component (A) is a linear organopolysiloxane having an average polymerization degree of 1,000 to 100,000.

6. The millable fluorosilicone rubber composition according to any one of claims 1 to 5, wherein component (E) is an organic peroxide curing agent and an amount of the organic peroxide curing agent is 0.1 to 10 parts by mass.

7. The millable fluorosilicone rubber composition according to any one of claims 1 to 5, wherein component (E) is an addition reaction curing agent that is a combination of 0.1 to 40 parts by mass of an organohydrogenpolysiloxane and a catalytic amount of a platinum group metal-based catalyst.

8. The millable fluorosilicone rubber composition according to claim 4, wherein component (F) is a dispersant for silica.

9. A cured product of the millable fluorosilicone rubber composition according to any one of claims 1 to 8.
